# EUROPÄISCHE PATENTSCHRIFT

(11) **EP 3 111 284 B1**
(45) Veröffentlichungstag und Bekanntmachung des Hinweises auf die Patenterteilung: **04.12.2019**
(21) Anmeldenummer: 15708149.8
(22) Anmeldetag: 25.02.2015
(51) Int. Cl.: G05B 19/042

(54) **REDUNDIERBARE EINGANGSSCHALTUNG, EINGANGSSCHALTUNGSEINHEIT MIT MINDESTENS EINER EINGANGSSCHALTUNG UND VERFAHREN ZUM BETRIEB EINER SOLCHEN EINGANGSSCHALTUNGSEINHEIT**
INPUT CIRCUIT THAT CAN BE MADE REDUNDANT, INPUT CIRCUIT UNIT HAVING AT LEAST ONE INPUT CIRCUIT, AND METHOD FOR OPERATING SUCH AN INPUT CIRCUIT UNIT
CIRCUIT D'ENTRÉE À REDONDANCE, UNITÉ DE CIRCUIT D'ENTRÉE COMPRENANT AU MOINS UN CIRCUIT D'ENTRÉE ET PROCÉDÉ SERVANT À FAIRE FONCTIONNER UNE UNITÉ DE CIRCUIT D'ENTRÉE DE CE TYPE

(30) Priorität: 26.02.2014 DE 102014203429
(43) Veröffentlichungstag der Anmeldung: 04.01.2017
(73) Patentinhaber: Siemens Aktiengesellschaft, 80333 München (DE)
(72) Erfinder: GRIESBAUM, Wilhelm, 76870 Kandel (DE)
(86) Internationale Anmeldenummer: PCT/EP2015/053865
(87) Internationale Veröffentlichungsnummer: WO 2015/128336

(56) Entgegenhaltungen:
- EP-A2- 2 461 221
- US-A- 6 147 520
- US-A1- 2012 280 327

## Beschreibung

Die Erfindung betrifft eine im Folgenden als Eingangsschaltung bezeichnete Schaltung zum Erfassen von Eingangssignalen. Als redundierbare Eingangsschaltung ermöglicht die Eingangsschaltung einen Einzelbetrieb oder einen redundanten Betrieb, also einen Betrieb zusammen mit einer weiteren Eingangsschaltung, und mithin eine nicht-redundante bzw. eine redundante Erfassung des jeweiligen Eingangssignals. Die Erfindung betrifft im Weiteren auch eine Eingangsschaltungseinheit mit mindestens einer solchen Eingangsschaltung sowie ein Verfahren zum Betrieb einer solchen Eingangsschaltungseinheit.

Eingangsschaltungen und redundante Eingangsschaltungen sind an sich bekannt.

Bei bekannten Eingangsschaltungen erfolgt die Erfassung des jeweiligen Eingangssignals über fest für einen jeweiligen Messbereich ausgelegte Eingänge, an denen jeweils nur digitale oder nur analoge Eingangssignale zuführbar sind. Für eine Redundierung von Analogeingängen zur Strommessung, zum Beispiel 4 bis 20mA, wird eine zweipolige Eingangsschaltung verwendet.

Aus der EP 2 461 221 A2 ist ein Steuergerät mit einer Schaltung zur Verarbeitung von Signalen unterschiedlicher Sensortypen bekannt. Die beiden anschließbaren Sensortypen liefern entweder analoge Stromsignale oder PWM-Signale. Zur Bereitstellung eines zur Auswertung solcher Signale benötigten Referenzpotenzials umfasst die Schaltung einen Pull-Up-Widerstand und einen Pull-Down-Widerstand. Beide sind mittels durch einen Mikrocontroller ansteuerbarer Schalter aktivierbar. Der in die Schaltung fließende Messstrom wird über ein

Tiefpassfilter gleichzeitig auf zwei Eingangskanäle des Mikrocontrollers geführt und der Mikrocontroller wertet die Signale an demjenigen Eingangskanal aus, der zu dem zuvor aktivierten Widerstand gehört.

Aus der US 2012/9279327 A1 und der US 6, 147, 520 sind Schaltungen bekannt, bei denen zur Anpassung eines jeweiligen Gesamtwiderstands ein einzelner Widerstand mittels eines parallelgeschalteten Schalters überbrückbar ist.

Eine Aufgabe der vorliegenden Erfindung besteht darin, eine weitere Ausführungsform einer redundierbaren Eingangsschaltung sowie eine weitere Ausführungsform einer Eingangsschaltungseinheit mit zumindest einer derartigen Eingangsschaltung anzugeben.

Hinsichtlich der Eingangsschaltung wird diese Aufgabe erfindungsgemäß mit den Merkmalen des Anspruchs 1 gelöst. Dazu ist vorgesehen, dass die Eingangsschaltung einen Eingang zur Zuführung eines von einem Signalgeber erhältlichen Eingangssignals in Form eines Messstroms, einen Eingangswiderstand sowie einen Messwiderstand aufweist, wobei parallel zu dem Eingangswiderstand ein elektronisch ansteuerbarer Schalter angeschlossen ist und wobei der Messstrom einen als Messwert auswertbaren Spannungsabfall über dem Messwiderstand hervorruft. Die Eingangsschaltung ist entsprechend einem jeweiligen Betriebsmodus als Binäreingangsschaltung oder als Stromeingangsschaltung betreibbar und demnach umschaltbar. Der Schalter ist zur Umschaltung der Eingangsschaltung entsprechend dem jeweiligen Betriebsmodus vorgesehen und ist dementsprechend in Abhängigkeit von dem Betriebsmodus ansteuerbar. Im geschlossenen Zustand überbrückt der Schalter den Eingangswiderstand. Die Eingangsschaltung wird damit niederohmig, so dass analoge Strommessungen (Betrieb als Stromeingangsschaltung) möglich sind. Im offenen Zustand ist der Schalter unwirksam. Der Eingangswiderstand bleibt aktiv, bildet zusammen mit dem Messwiderstand einen Spannungsteiler und das Potential eines Mittelabgriffs des Spannungsteilers kann zur Erkennung eines High- oder Low-Pegels des Eingangssignals ausgewertet werden (Betrieb als Binäreingangsschaltung). Ebenso bewirkt der Eingangswiderstand für einen Betrieb der Eingangsschaltung als analoger Spannungseingang eine Begrenzung der über dem Messwiderstand abfallenden Spannung (Messspannung) und eine Anpassung an die Messbereichsverhältnisse.

Darüber hinaus ist vorgesehen, dass die Eingangsschaltung im Folgenden als Querkopplung bezeichnete Mittel zur automatischen Detektion einer weiteren, redundanten Eingangsschaltung umfasst. Aufgrund einer mittels der Querkopplung erkannten redundanten Eingangsschaltung ist eine Aktivierung eines Mittels zur Kompensation eines aufgrund einer Aufteilung des Messstroms resultierenden verringerten Spannungsabfalls bewirkbar, also zum Beispiel eine Aktivierung einer Multiplikation, welche durch einen als Mittel zur Kompensation fungierenden Mikrocontroller ausgeführt wird. Auf diese Weise erfolgt eine automatische Erkennung einer redundanten Eingangsschaltung und eine ebenso automatische Kompensation einer mit der Aufteilung des Messstroms auf die dann zwei Eingangsschaltungen einhergehenden Verfälschung eines nur aufgrund des Spannungsabfalls in der jeweiligen Eingangsschaltung ermittelten Messwerts.

Der Vorteil der erfindungsgemäßen Eingangsschaltung sowie einer Eingangsschaltungseinheit mit zumindest einer derartigen Eingangsschaltung besteht darin, dass eine vergleichsweise einfache Schaltung angegeben wird, die mittels einer Betätigung des elektronisch ansteuerbaren Schalters zwischen einer analogen Strommessung und einer analogen oder digitalen Spannungsmessung umgeschaltet werden kann. Mittels ein und derselben Eingangsschaltung können damit zugeführte digitale oder analoge Eingangssignale erfasst und ausgewertet werden. Durch Ansteuerung des Schalters kann der Eingangswiderstand kurzgeschlossen werden. Der Eingang der Eingangsschaltung wird damit insgesamt niederohmig und auf diese Weise kann mit der Eingangsschaltung auch eine analoge Strommessung erfolgen.

Eine Eingangsschaltung mit mittels eines Schalters überbrückbaren Widerständen ist ebenfalls bekannt. Aus der DE 10 2008 043 199 A ist eine Schaltung eines I/O-Moduls zum Anschluss eines Feldgeräts bekannt.

Im Gegensatz zu der erfindungsgemäßen umschaltbaren Eingangsschaltung ist das I/O-Modul nur zur analogen Strommessung vorgesehen und entsprechend erfasst das I/O-Modul einen vom Feldgerät gelieferten Messstrom. Daneben stellt das I/O-Modul eine Versorgungsspannung für das Feldgerät bereit, die in Abhängigkeit vom jeweiligen Messstrom eingestellt wird. Um die Belastung einer zur Versorgung des Feldgeräts bestimmten Batterie des I/O-Moduls zu minimieren, lassen sich einzelne in einem Messzweig des I/O-Moduls vorgesehene Widerstände mittels eines parallelgeschalteten Schalters überbrücken und damit gleichsam abschalten. Auf diese Weise werden ein Messwiderstand oder ein Kommunikationswiderstand "abgeschaltet", wenn keine Strommessung bzw. keine HART-Kommunikation vorgesehen ist.

Aus der WO 2006/127373 A ist ebenfalls eine zur Versorgung eines Feldgeräts mit einer Betriebsspannung vorgesehene Schaltung bekannt.

Diese umfasst einen Messwiderstand und einen dazu in Reihe geschalteten einstellbaren Spannungsregler und dieser wiederum einen Verstärker, eine Zenerdiode und zwei zu einer Darlington-Schaltung zusammengefasste Transistoren. Mittels des Verstärkers erfolgt eine Verstärkung einer aufgrund eines jeweiligen Messstroms jeweils resultierenden Spannung.

Diese wird zur Ansteuerung einer Zenerdiode und letztere zur Ansteuerung der Darlington-Schaltung verwendet. Die Darlington-Schaltung fungiert als Stellglied in dem Spannungsregler, bewirkt aber, anders als dies bei der erfindungsgemäßen umschaltbaren Eingangsschaltung der Fall ist, keine Umschaltung aufgrund verschiedener Betriebsmodi.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Als besondere Ausführungsform der umschaltbaren Eingangsschaltung und des davon umfassten elektronisch ansteuerbaren Schalters kommen zwei in einer Darlington-Schaltung zusammengefasste Transistoren in Betracht, die auch bei einem nur geringen Steuerstrom eine ausreichende Erhöhung des Stromverstärkungsfaktors bewirken, so dass auch bei einem nur geringen Steuerstrom, der den Messstrom nur unwesentlich verfälscht, eine sichere elektrische Überbrückung des Eingangswiderstands resultiert.

Bei einer weiteren Ausführungsform der umschaltbaren Eingangsschaltung umfasst diese im Anschluss an den jeweiligen Eingang eine als Spannungsteiler fungierende Reihenschaltung des Messwiderstands mit einem vorgeschalteten Eingangswiderstand, wobei der Messwiderstand gegen Masse geschaltet ist. Indem der Messwiderstand gegen Masse geschaltet ist, erfolgt innerhalb der jeweiligen Eingangsschaltung eine Ableitung des Messstroms, ohne dass dafür weitere Maßnahmen erforderlich sind. Die Eingangsschaltung kann damit als einpolige Eingangsschaltung (Eingangsschaltung mit einem sogenannten "single-ended Eingang") betrieben werden. Dies erleichtert die Verdrahtung der jeweiligen Sensorik auf die Eingangsschaltung oder eine Vielzahl solcher Eingangsschaltungen, weil jeweils nur eine Ader aufgelegt werden muss.

Die hier und im Folgenden beschriebene umschaltbare Eingangsschaltung kommt als redundierbare Eingangsschaltung zum Betrieb zusammen mit einer weiteren (redundanten) umschaltbaren Eingangsschaltung in Betracht. Eine Kombination zweier solcher Eingangsschaltungen wird im Folgenden als Eingangsschaltungseinheit bezeichnet. Gleichfalls wird als Eingangsschaltungseinheit eine Vorrichtung bezeichnet, die eine Aufnahme und/oder einen Anschluss zumindest zweier solcher Eingangsschaltungen erlaubt und damit gewissermaßen als Trägereinheit für zumindest eine Eingangsschaltung fungiert.

Die oben genannte Aufgabe wird damit auch mit einer Eingangsschaltungseinheit mit den Merkmalen des Anspruchs 4 gelöst. Dazu ist vorgesehen, dass die Eingangsschaltungseinheit eine erste Teilschaltung in Form einer Eingangsschaltung wie hier und im Folgenden beschrieben umfasst und dass mit der ersten Teilschaltung innerhalb der Eingangsschaltungseinheit eine redundante, zweite Teilschaltung in Form einer weiteren derartigen Eingangsschaltung kombinierbar ist. Jede Teilschaltung/Eingangsschaltung umfasst einen Eingang zur Zuführung eines von einem externen Signalgeber erhältlichen Messstroms. Der Messstrom ruft einen als Messwert (Eingangssignal) auswertbaren Spannungsabfall über einem Messwiderstand hervor, wobei eine Parallelschaltung zweier Eingangsschaltungen eine Aufteilung des Messstroms auf die erste und die zweite Eingangsschaltung bewirkt und damit grundsätzlich den aufgrund des Messstroms erhältlichen Messwert verfälscht. Zum Ausgleich einer solchen Verfälschung weist zumindest eine Eingangsschaltung Mittel zur Kompensation des aufgrund der Aufteilung des Messstroms resultierenden verringerten Spannungsabfalls über dem Messwiderstand auf.

Der Vorteil dieses Aspekts der Erfindung besteht darin, dass eine vergleichsweise einfache Eingangsschaltungseinheit angegeben wird, in welcher zwei Eingangsschaltungen der hier und im Folgenden beschriebenen Art zusammengefasst oder zusammenfassbar sind, die aber auch mit nur einer Eingangsschaltung betreibbar ist. Die beiden Eingangsschaltungen, insbesondere zwei identische oder zumindest funktionsäquivalente Eingangsschaltungen, fungieren als grundsätzlich unabhängig voneinander betreibbare Teilschaltungen und werten einen Messstrom aus, der aufgrund eines an deren Eingang angelegten Stroms oder eines an den Eingang angelegten Potentials in die Eingangsschaltung fließt.

Eine beim redundanten Betrieb zweier Eingangsschaltungen resultierende Verfälschung aufgrund des in jede Eingangsschaltung fließenden Messstroms wird kompensiert, so dass ein von der jeweiligen Eingangsschaltung und der Eingangsschaltungseinheit insgesamt ausgegebenes Signal den tatsächlichen Wert der von dem Signalgeber ausgegebenen elektrischen Größe und des jeweils resultierenden Messstroms repräsentiert.

Als Mittel zur Kompensation des aufgrund der Aufteilung des Messstroms resultierenden verringerten Spannungsabfalls über dem Messwiderstand fungiert bei einer Ausführungsform der Eingangsschaltungseinheit ein Mikrocontroller, wobei mittels des Mikrocontrollers eine rechnerische Korrektur des Messwerts, insbesondere eine rechnerische Korrektur in Form einer Multiplikation des Messwerts mit einem vorgegebenen oder vorgebbaren Faktor, bewirkbar ist. Eine Multiplikation eines Messwerts mit einem Faktor ist eine mit einem Mikrocontroller leicht zu bewerkstelligende Maßnahme. Der jeweilige Faktor beschreibt als vorgegebener oder vorgebbarer Faktor quantitativ die Aufteilung des Messstroms auf die beiden Eingangsschaltungen. Bei einer Aufteilung des Messstroms, bei der zum Beispiel 97% des Messstroms in die erste Eingangsschaltung 12 fließen und die restlichen 3% in die zweite Eingangsschaltung 14 fließen, kann die Kompensation der damit einhergehenden Verfälschung des Messwerts leicht dadurch erreicht werden, dass auf Seiten der ersten Eingangsschaltung 12 der Messwert zum Beispiel mit einem Faktor 1,03 (= 1 + 3 %) multipliziert wird. Die rechnerische Kompensation auf Seiten der zweiten Eingangsschaltung 14 kann bei der angenommenen Aufteilung des Messstroms zum Beispiel mit einem Faktor 32,33 (= 97% / 3%) erfolgen. Für andere Aufteilungen des Messstroms ergeben sich nach dem oben veranschaulichten Schema andere Faktoren.

Die eingangs genannte Aufgabe wird auch mit einem Verfahren zum Betrieb einer Eingangsschaltungseinheit wie hier und im Folgenden beschrieben gelöst. Bei dem Betriebsverfahren wird im Falle einer Parallelschaltung einer ersten und einer zweiten Eingangsschaltung eine Aufteilung des Messstroms auf die erste und die zweite Eingangsschaltung kompensiert.

Bei einer Ausführungsform des Verfahrens wird eine Parallelschaltung einer ersten und einer zweiten Eingangsschaltung automatisch erkannt und als Ergebnis einer solchen automatischen Erkennung erfolgt zur Kompensation der Aufteilung des Messstroms eine rechnerische Korrektur eines aufgrund des Spannungsabfalls über dem Messwiderstand erhältlichen Messwerts, insbesondere eine rechnerische Korrektur in Form einer Multiplikation des Messwerts mit einem vorgegebenen oder vorgebbaren Faktor.

Nachfolgend wird ein Ausführungsbeispiel der Erfindung anhand der Zeichnungen näher erläutert. Einander entsprechende Gegenstände oder Elemente sind in allen Figuren mit den gleichen Bezugszeichen versehen.

Es zeigen
- FIG 1: eine Schaltungseinheit zur Verarbeitung von Eingangssignalen mit zwei redundanten Teilschaltungen und
- FIG 2: eine spezielle Ausführungsform einer Teilschaltung.

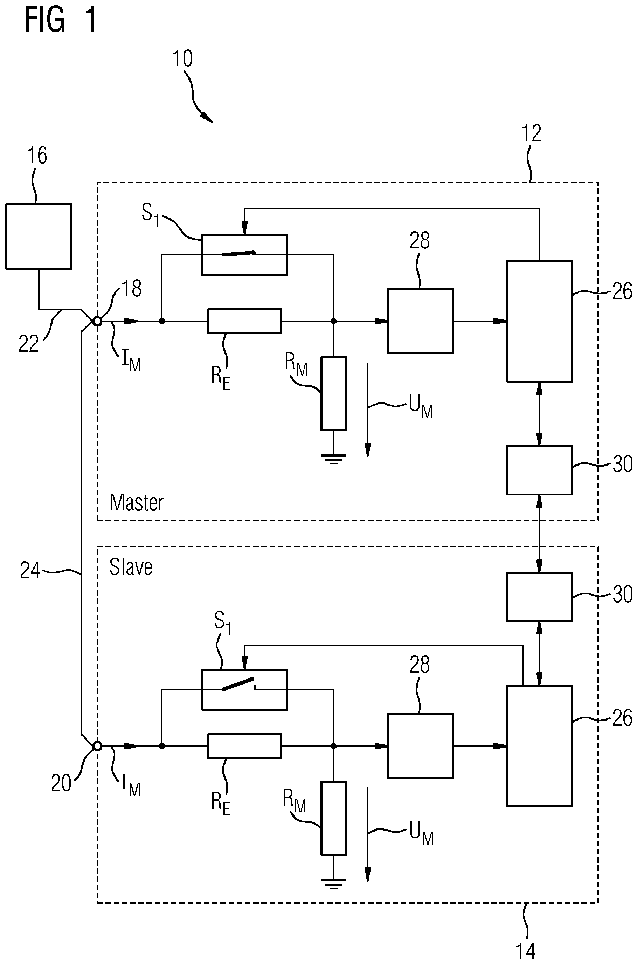

FIG 1 zeigt eine schematische Darstellung einer Schaltungseinheit zur redundanten Signalerfassung, nämlich zur Erfassung von Eingangssignalen. Die Schaltungseinheit fungiert entsprechend als Eingangsschaltungseinheit 10. Die Eingangsschaltungseinheit 10 umfasst eine erste Teilschaltung 12, die zur redundanten Signalerfassung zusammen mit einer identischen oder zumindest funktionsäquivalenten, komplementären zweiten Teilschaltung 14 verwendbar ist. Die oder jede Teilschaltung 12, 14 der Eingangsschaltungseinheit 10 fungiert innerhalb der Eingangsschaltungseinheit 10 als Eingangsschaltung 12, 14, so dass die Bezeichnungen Eingangsschaltung 12, 14 und Teilschaltung 12, 14 gleichbedeutend sind.

In einer Eingangsschaltungseinheit 10 mit zwei derartigen Teilschaltungen 12, 14 wird zur Unterscheidung im Folgenden eine erste Teilschaltung/Eingangsschaltung 12 als Masterschaltung 12 oder kurz als Master 12 und eine zweite, komplementäre Teilschaltung/Eingangsschaltung 14 entsprechend als Slaveschaltung 14 oder kurz als Slave 14 bezeichnet. Die eine Teilschaltung 12, 14 oder beide Teilschaltungen 12, 14 umfassende Eingangsschaltungseinheit 10 wird zur Unterscheidung von der oder jeder jeweils umfassten Teilschaltung/Eingangsschaltung 12, 14 im Folgenden mitunter auch als Gesamtschaltung 10 bezeichnet.

Die Slaveschaltung 14 ist innerhalb der Gesamtschaltung 10 optional und sowohl die erste Teilschaltung 12 wie auch die zweite Teilschaltung 14 kann die Funktionalität der Masterschaltung 12 übernehmen. Bei modularen, steckbar oder in sonst geeigneter Art und Weise lösbar mit der Gesamtschaltung 10 verbindbaren Teilschaltungen 12, 14 ergibt sich üblicherweise die Funktionalität einer der beiden Teilschaltungen 12, 14 als Master 12 oder Slave 14 aus dem Umstand, welche der beiden Teilschaltungen 12, 14 in der Gesamtschaltung 10 zuerst aktiv geworden ist.

An die Eingangsschaltungseinheit 10 und damit an die zumindest eine davon umfasste Teilschaltung 12, 14 ist in an sich bekannter Art und Weise eine im Folgenden als Signalgeber 16 bezeichnete Signalquelle angeschlossen. Bei einem solchen Signalgeber 16 oder einem sonstigen Messumformer handelt es sich üblicherweise um eine in einem zu steuernden und oder zu überwachenden technischen Prozess, zum Beispiel einem Kraftwerk (nicht gezeigt), befindliche Signalquelle, also einen grundsätzlich an sich bekannten digitalen oder analogen Sensor. Mittels eines derartigen Signalgebers 16 (und in der Praxis mit einer Vielzahl solcher Signalgeber 16) wird der Zustand des jeweiligen technischen Prozesses in an sich bekannter Art und Weise erfasst.

Bei der Darstellung in FIG 1 ist erkennbar, dass der Signalgeber 16 an einen Eingang 18 der ersten Teilschaltung 12 und an einen Eingang 20 der zweiten Teilschaltung 14 angeschlossen ist. Dies kann durch entsprechendes Auflegen der oder jeder vom Signalgeber 16 kommenden Signalleitung 22 oder mittels einer Brücke 24 innerhalb der Gesamtschaltung 10 erfolgen.

Bei einem Signal vom Signalgeber 16 fließt ein Messstrom I_{M} in die jeweilige Teilschaltung 12, 14. Mittels eines von der Teilschaltung 12, 14 umfassten und im Folgenden kurz als Schalter S₁ bezeichneten Schaltelements ist einstellbar, ob der jeweilige Eingang 18, 20 als Binäreingang bzw. analoger Spannungseingang oder als Analogeingang für Stromsignale fungiert. Der Schalter S₁ ist mittels einer von der Teilschaltung 12, 14 umfassten Steuerungseinrichtung, zum Beispiel einem Mikrocontroller 26, und einem davon ausgegebenen Steuerstrom ansteuerbar. Für die Messung umfasst die Teilschaltung 12, 14 einen Spannungsteiler mit einem Eingangswiderstand R_{E} und einem gegen Masse geschalteten und damit auch als Pull-Down-Widerstand fungierenden Messwiderstand R_{M}. Der Schalter S₁ ist dabei parallel zu dem Eingangswiderstand R_{E} geschaltet.

Für den Betrieb als Stromeingang ist der Schalter S₁ geschlossen. Dies führt dazu, dass der Eingang 18, 20 der Teilschaltung 12, 14 niederohmig ist. Bei einem Betrieb der Teilschaltung 12, 14 als Stromeingang wird zum Beispiel ein Messstrom I_{M} in üblichen Wertebereichen wie zum Beispiel 0 bis 20mA oder 4 bis 20mA erfasst. In den anderen Fällen, wenn also die Teilschaltung 12, 14 als Binäreingang oder als analoger Spannungseingang fungiert, ist der Schalter S₁ offen.

Der im Folgenden als Messwert U_{M} bezeichnete Spannungsabfall über dem Messwiderstand R_{M} wird über ein zum Beispiel einen Multiplexer, einen Messverstärker und einen Analog-Digital-Konverter (ADC) umfassendes Messsystem 28 erfasst und durch den Mikrocontroller 26 eingelesen und als das jeweilige Eingangssignal ausgewertet. Wenn die Teilschaltung 12, 14 als Binäreingang betrieben wird, wird zum Beispiel mittels des Mikrocontrollers 26 ein vom Messsystem 28 ausgegebenes digitalisiertes Signal in Bezug auf einen vorgegebenen oder vorgebbaren oberen und/oder unteren Schwellwert ausgewertet und bei Über- oder Unterschreitung des Schwellwerts ein logisches High- oder logisches Low-Signal erzeugt.

Über eine Querkopplung 30 zum jeweiligen Redundanzpartner, also von der ersten Teilschaltung 12 zur zweiten Teilschaltung 14 und umgekehrt, erfolgt die Zuteilung der Mastereigenschaft. Mittels der Querkopplung 30 ist für eine Teilschaltung 12, 14 auch erkennbar, ob eine weitere Teilschaltung 12, 14 als Redundanzpartner vorhanden ist. Ist ein Redundanzpartner vorhanden, teilt sich der Messstrom I_{M} auf und fließt zu einem kleinen Anteil über den Eingang 20 der Slaveschaltung 14. Auf Seiten der Masterschaltung 12 ist dies rechnerisch korrigierbar und bei der hier beschriebenen Ausführungsform ist eine Korrektur in Form einer Multiplikation mit einem festen Faktor vorgesehen. Als Mittel für eine derartige Korrektur kommt der Mikrocontroller 26 in Betracht und zur Korrektur bewirkt der Mikrocontroller 26 entsprechend eine Multiplikation des eingelesenen Eingangssignals mit dem jeweiligen Korrekturfaktor. Ist kein Redundanzpartner gesteckt, fließt der Messstrom I_{M} vollständig im Master 12 und entsprechend ist keine Korrektur erforderlich.

Bei einer Redundierung von als Stromeingang fungierenden Eingängen 18, 20 wird nur der Schalter S₁ der als Master 12 fungierenden Teilschaltung 12 geschlossen. Der Messstrom I_{M} fließt hierbei zum wesentlichen Anteil über den Messwiderstand R_{M} der Masterschaltung 12 und erzeugt den Spannungsabfall U_{M}. Bei einer Redundierung von als Binäreingang (Spannungseingang) fungierenden Eingängen 18, 20 sind beide Schalter S₁, also der Schalter S1 der als Master 12 fungierenden Teilschaltung 12, und der Schalter S1 der als Slave 14 fungierenden Teilschaltung 14, offen.

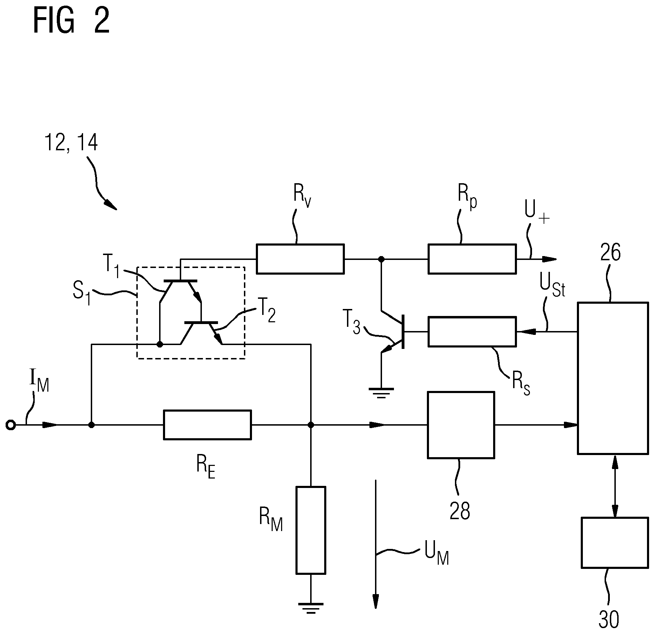

Die Darstellung in FIG 2 zeigt eine besondere Ausführungsform als Realisierung einer der Teilschaltungen 12, 14 oder zweier redundanter Teilschaltungen 12, 14. Der Schalter S₁ (FIG 1) ist dabei in Form zumindest eines elektronischen Schaltelements, hier in Form zweier Transistoren T₁, T₂ in einer Darlington-Schaltung, realisiert. Die Ansteuerung des Schalters S₁ oder die Ansteuerung des oder jedes als Schalter S₁ fungierenden Schaltelements/Transistors T₁, T₂ erfolgt mittels eines vom Mikrocontroller 26 ausgebbaren Steuersignals (U_{St}). Speziell bei einer Realisierung des Schalters S₁ in Form zweier in einer Darlington-Schaltung zusammengefasster Transistoren T₁, T₂ oder einem Darlington-Transistor ergibt sich nur eine vernachlässigbar geringe Verfälschung des Messstroms I_{M} durch die elektronische Ansteuerung des Schalters S₁.

Bei der in FIG 2 gezeigten Ausführungsform wird das vom Mikrocontroller 26 generierte Steuersignal U_{St} auf einen als Invertierungsstufe fungierenden Vorschalttransistor T₃ gegeben. Dieser ist zwischen Masse und - über einen Pull-Up-Widerstand (R_{P}) - ein Betriebsspannungspotential geschaltet. Die Darlington-Schaltung wird damit aus dem Betriebsspannungspotential bestromt. Bei einem Steuersignal U_{St} vom Mikrocontroller 26 mit einem HIGH-Pegel ist der Vorschalttransistor T₃ durchgeschaltet und der Schalter S₁ offen. Bei einem Steuersignal U_{St} vom Mikrocontroller 26 mit einem LOW-Pegel ist der Vorschalttransistor T₃ offen und die Darlington-Schaltung mit dem Betriebsspannungspotential verbunden, so dass der Schalter S₁ schließt und der Eingangswiderstand R_{E} kurzgeschlossen ist. Der Vorwiderstand R_{V} ist hochohmig, so dass nur ein geringer Steuerstrom fließt, der den Messstrom I_{M} nur unwesentlich erhöht.

Einzelne Vorteile der hier beschriebenen umschaltbaren Eingangsschaltungseinheit 10 bestehen darin, dass als Eingang 18, 20 eine einzelne Anschlussklemme ausreicht, denn bei einer Redundierung kann der Messstrom I_{M} mittels einer schaltungsinternen Brücke 24 zur Slaveschaltung 14 geleitet werden. Der Messstrom I_{M} wird beim redundanten Betrieb, aber genauso auch beim Einzelbetrieb, schaltungsintern gegen Masse abgeleitet und erfordert damit innerhalb der Eingangsschaltungseinheit 10 oder der jeweiligen Teilschaltung 12, 14 keine weiteren Maßnahmen. Der jeweilige Eingangstyp, also "Binär", "Strom analog" oder "Spannung analog", ist mittels des Mikrocontrollers 26 über Software oder vorgegebene oder vorgebbare Parameter wählbar. Die Umschaltung erfolgt elektronisch mittels des Mikrocontrollers 26. Auch beim Eingangstyp "Strom analog" ist eine Redundierung durch direktes Parallelschalten zweier Teilschaltung 12, 14 möglich. Es sind keine externen Zusatzmaßnahmen, wie zum Beispiel Brückeneinstellungen innerhalb der Eingangsschaltungseinheit 10, notwendig. Binärwerte können auch als analoge Spannung gemessen werden. Die Zustandsbestimmung erfolgt mittels einer vorgegebenen oder vorgebbaren Vergleichsschwelle. Eine Überlastfestigkeit der Eingangsschaltungseinheit 10 lässt sich durch ein getaktetes Öffnen und Schließen des Schalters S₁ der oder jeder Teilschaltung 12, 14 erreichen.

Eine Teilschaltung 12, 14 der hier beschriebenen Art ist auch autark als Eingangsschaltung 12, 14, nämlich als mittels einer entsprechenden Ansteuerung des davon umfassten elektronisch ansteuerbaren Schalter S₁ umschaltbare Eingangsschaltung 12, 14, betreibbar. Je nach Schaltstellung des Schalter S₁ erfolgt mittels der Eingangsschaltung 12, 14 eine analoge Strommessung oder eine analoge oder digitale Spannungsmessung.

### Bezugszeichenliste

- 10: Eingangsschaltungseinheit / Gesamtschaltung
- 12: (erste) Teilschaltung / (erste) Eingangsschaltung / Masterschaltung / Master
- 14: (zweite) Teilschaltung / (zweite) Eingangsschaltung / Slaveschaltung / Slave
- 16: Signalgeber
- 18: Eingang
- 20: Eingang
- 22: Signalleitung
- 24: Brücke
- 26: Mikrocontroller
- 28: Messsystem
- 30: Querkopplung

- S₁: Schalter
- R_{E}: Eingangswiderstand
- R_{M}: Messwiderstand
- I_{M}: Messstrom
- U_{M}: Messwert / Spannungsabfall über dem Messwiderstand
- U_{St}: Steuersignal
- T₁: Transistor
- T₂: Transistor
- T₃: Vorschalttransistor
- R_{P}: Pull-Up-Widerstand
- R_{V}: Vorwiderstand

## Patentansprüche

1. Redundierbare umschaltbare Eingangsschaltung (12) mit einem Eingang (18, 20) zur Zuführung eines von einem Signalgeber (16) erhältlichen Messstroms (I_{M}), einem Eingangswiderstand (R_{E}) sowie einem Messwiderstand (R_{M}),
wobei die Eingangsschaltung (12) entsprechend einem jeweiligen Betriebsmodus als Binäreingangsschaltung oder als Stromeingangsschaltung betreibbar ist,
wobei parallel zu dem Eingangswiderstand (R_{E}) ein in Abhängigkeit vom Betriebsmodus der Eingangsschaltung (12) elektronisch ansteuerbarer Schalter (S₁) angeschlossen ist,
wobei der ansteuerbare Schalter (S₁) im geschlossenen Zustand den Eingangswiderstand (R_{E}) überbrückt,
wobei der Messstrom (I_{M}) einen als Messwert auswertbaren Spannungsabfall (U_{M}) über dem Messwiderstand (R_{M}) hervorruft,
wobei eine Querkopplung (30) als Mittel zur Detektion einer weiteren redundierbaren Eingangsschaltung als redundante Eingangsschaltung (14) fungiert,
wobei aufgrund einer erkannten redundanten Eingangsschaltung (14) eine Aktivierung eines Mittels (26) zur Kompensation eines aufgrund einer Aufteilung des Messstroms (I_{M}) auf die Eingangsschaltung (12) und die redundante Eingangsschaltung (14) resultierenden verringerten Spannungsabfalls (U_{M}) bewirkbar ist.

2. Redundierbare umschaltbare Eingangsschaltung (12, 14) nach Anspruch 1, wobei der elektronisch ansteuerbare Schalter (S₁) in Form zweier in einer Darlington-Schaltung zusammengefasster Transistoren (T₁, T₂) realisiert ist.

3. Redundierbare umschaltbare Eingangsschaltung (12, 14) nach einem der Ansprüche 1 oder 2, mit einer Reihenschaltung des Eingangswiderstands (R_{E}) und des Messwiderstands (R_{M}), wobei der Messwiderstand (R_{M}) gegen Masse geschaltet ist.

4. Eingangsschaltungseinheit (10) mit einer Teilschaltung in Form einer ersten Eingangsschaltung (12) gemäß einem der vorangehenden Ansprüche sowie einer damit kombinierbaren, redundanten Teilschaltung in Form einer weiteren, zweiten Eingangsschaltung (14) gemäß einem der vorangehenden Ansprüche,
wobei eine Parallelschaltung der ersten und der zweiten Eingangsschaltung (12, 14) eine Aufteilung des Messstroms (I_{M}) auf die erste und die zweite Eingangsschaltung (12, 14) bewirkt und
wobei zumindest eine Eingangsschaltung (12, 14) Mittel (26) zur Kompensation des aufgrund der Aufteilung des Messstroms (I_{M}) resultierenden verringerten Spannungsabfalls (U_{M}) über dem Messwiderstand (R_{M}) aufweist.

5. Eingangsschaltungseinheit (10) nach Anspruch 4,
wobei als Mittel (26) zur Kompensation des aufgrund der Aufteilung des Messstroms (I_{M}) resultierenden verringerten Spannungsabfalls (U_{M}) über dem Messwiderstand (R_{M}) ein Mikrocontroller (26) fungiert und
wobei mittels des Mikrocontrollers (26) eine Multiplikation des Messwerts mit einem vorgegebenen oder vorgebbaren Faktor bewirkbar ist.

6. Verfahren zum Betrieb einer Eingangsschaltungseinheit (10) nach einem der Ansprüche 4 bis 5, wobei im Falle einer Parallelschaltung einer ersten und einer zweiten Eingangsschaltung (12, 14) eine Aufteilung des Messstroms (I_{M}) auf die erste und die zweite Eingangsschaltung (12, 14) kompensiert wird.

7. Verfahren nach Anspruch 6, wobei eine Parallelschaltung einer ersten und einer zweiten Eingangsschaltung (12, 14) automatisch erkannt wird und als Ergebnis einer solchen automatischen Erkennung zur Kompensation der Aufteilung des Messstroms (I_{M}) eine Multiplikation eines aufgrund des Spannungsabfalls (U_{M}) über dem Messwiderstand (R_{M}) erhältlichen Messwerts mit einem vorgegebenen oder vorgebbaren Faktor erfolgt.

## Claims

1. Switchable input circuit that can be made redundant (12) with an input (18, 20) for feeding of a measurement current (I_{M}) obtainable from a signalling device (16), an input resistor (R_{E}) and also a measurement resistor (R_{M}),
wherein the input circuit (12) is able to be operated in accordance with a respective operating mode as a binary input circuit or as a current input circuit,
wherein a switch (S₁) able to be activated electronically as a function of the operating mode of the input circuit (12) is connected in parallel to the input resistor (R_{E}),
wherein, in its closed state, the activatable switch (S₁) bridges the input resistor (R_{E}),
wherein the measurement current (I_{M}) gives rise to a voltage drop (U_{M}) across the measurement resistor (R_{M}) able to be evaluated as a measured value,
wherein a cross coupling (30) functions as means for detection of a further input circuit that can be made redundant as a redundant input circuit (14),
wherein, as a result of a detected redundant input circuit (14), an activation of a means (26) of compensating for a reduced voltage drop (U_{M}) resulting because of a division of the measuring current (I_{M}) among the input circuit (12) and the redundant input circuit (14) is able to be brought about.

2. Switchable input circuit that can be made redundant (12, 14) according to claim 1, wherein the electronically activatable switch (S₁) is realised in the form of two transistors (T₁, T₂) combined in a Darlington circuit.

3. Switchable input circuit that can be made redundant (12, 14) according to one of claims 1 or 2, with a series circuit of the input resistor (R_{E}) and of the measurement resistor (R_{M}), wherein the measurement resistor (R_{M}) is connected to ground.

4. Input circuit unit (10) with a part circuit in the form of a first input circuit (12) according to one of the preceding claims, as well as a redundant part circuit able to be combined therewith, in the form of a further, second input circuit (14) according to one of the preceding claims,
wherein a parallel connection of the first and the second input circuit (12, 14) causes the measurement current (I_{M}) to be divided among the first and the second input circuit (12, 14), and
wherein at least one input circuit (12, 14) has means (26) for compensating for the reduced voltage drop (U_{M}) across the measurement resistor (R_{M}) resulting because of the division of the measuring current (I_{M}).

5. Input circuit unit (10) according to claim 4,
wherein a microcontroller (26) functions as a means (26) of compensating for the reduced voltage drop (U_{M}) across the measurement resistor (R_{M}) resulting because of the division of the measuring current (I_{M}) and
wherein a multiplication of the measured value by a predetermined or predeterminable factor is able to be brought about by the microcontroller (26).

6. Method for operating an input circuit unit (10) according to one of claims 4 to 5, wherein, in the event of a parallel connection of the first and the second input circuit (12, 14) a division of the measuring current (I_{M}) among the first and the second input circuit (12, 14) is compensated for.

7. Method according to claim 6, wherein a parallel connection of a first and a second input circuit (12, 14) is recognised automatically and as a result of such an automatic recognition, to compensate for the division of the measurement current (I_{M}), there is a multiplication of a measured value able to be obtained as a result of the voltage drop (U_{M}) across the measurement resistor (R_{M}) by a predetermined or predeterminable factor.

## Revendications

1. Circuit (12) d'entrée, qui peut être redondant et qui peut être commuté, comprenant une entrée (18, 20) pour envoyer un courant (I_{M}) de mesure, obtenu d'un émetteur (16) de signal, une résistance (R_{E}) d'entrée, ainsi qu'une résistance (R_{M}) de mesure,
dans lequel le circuit (12) d'entrée peut fonctionner, conformément à un mode de fonctionnement respectif, en circuit d'entrée binaire ou en circuit d'entrée de courant,
dans lequel il est connecté, en parallèle à la résistance (R_{E}) d'entrée, un interrupteur (S₁) pouvant être commandé électroniquement, en fonction du mode de fonctionnement du circuit (12) d'entrée,
dans lequel l'interrupteur (S₁) pouvant être commandé shunte, à l'état fermé, la résistance (3R_{E}) d'entrée,
dans lequel le courant (I_{M}) de mesure provoque, par la résistance (R_{M}) de mesure, une chute (U_{M}) de tension, pouvant être exploitée comme valeur de mesure,
dans lequel un couplage (30) transversal sert, comme circuit (14) d'entrée redondant, de moyen de détection d'un autre circuit d'entrée pouvant être redondant,
dans lequel, sur la base d'un circuit (14) d'entrée redondant détecté, il peut être provoquée une activation d'un moyen (26) de compensation d'une chute (I_{M}) de tension diminuée provenant d'une répartition du courant (I_{M}) de mesure sur le circuit (12) d'entrée et sur le circuit (14) d'entrée redondant.

2. Circuit (12, 14) d'entrée pouvant être redondant et pouvant être commuté suivant la revendication 1, dans lequel l'interrupteur (S₁) pouvant être commandé électroniquement est réalisé sous la forme de deux transistors (T₁, T₂) rassemblés suivant un montage Darlington.

3. Circuit (12, 14) d'entrée pouvant être redondant et pouvant être commuté suivant l'une des revendications 1 ou 2, comprenant un circuit série de la résistance (R_{E}) d'entrée et de la résistance (R_{M}) de mesure, la résistance (R_{M}) de mesure étant mise à la masse.

4. Unité (10) de circuit d'entrée, ayant un circuit partiel sous la forme d'un premier circuit (12) d'entrée suivant l'une des revendications précédentes, ainsi qu'un circuit partiel redondant pouvant être combiné sous la forme d'un autre deuxième circuit (14) d'entrée suivant l'une des revendications précédentes,
dans laquelle un circuit en parallèle du premier et du deuxième circuits (12, 14) d'entrée provoque une répartition du courant (I_{M}) de tension sur le premier et le deuxième circuits (12, 14) d'entrée et
dans lequel au moins un circuit (12, 14) d'entrée a, par la résistance (R_{M}) de mesure, des moyens (26) de compensation de la chute (U_{M}) de tension diminuée provenant de la répartition du courant (I_{M}) de mesure.

5. Unité (10) de circuit d'entrée suivant la revendication 4,
dans laquelle une micro-unité (26) de commande sert, par la résistance (R_{M}) de mesure, de moyens (26) de compensation de la chute (U_{M}) de tension diminuée provenant de la répartition du courant (I_{M}) de mesure et
dans laquelle, au moyen de la micro-unité (26) de commande, une multiplication de la valeur de mesure, par un facteur donné à l'avance ou pouvant l'être, peut être faite.

6. Procédé pour faire fonctionner une unité (10) de circuit d'entrée suivant l'une des revendications 4 à 5, dans lequel, dans le cas d'un circuit en parallèle d'un premier et d'un deuxième circuits (12, 14) d'entrée, on compense une répartition du courant (I_{M}) de mesure sur le premier et le deuxième circuit (12, 14) d'entrée.

7. Procédé suivant la revendication 6, dans lequel on détecte automatiquement un circuit en parallèle d'un premier et d'un deuxième circuits (12, 14) d'entrée et, en résultat d'une telle détection automatique, on effectue, pour la compensation de la répartition du courant (I_{M}) de mesure, une multiplication d'une valeur de mesure, obtenue par la résistance (R_{M}) de mesure sur la base de la chute (U_{M}) de tension, par un facteur donné à l'avance ou pouvant l'être.
